# EUROPEAN PATENT SPECIFICATION

(11) **EP 3 185 182 B1**
(45) Date of publication and mention of the grant of the patent: **15.07.2020**
(21) Application number: 16205063.7
(22) Date of filing: 19.12.2016
(51) Int. Cl.: G06K 19/06, G07D 7/0043, G07D 7/005, B41M 3/14, B42D 25/305, B42D 25/44, G09F 3/00

(54) **METHOD OF MANUFACTURING FOR AN ANTI-COUNTERFEITING LABEL**
HERSTELLUNGSVERFAHREN FÜR EIN FÄLSCHUNGSSICHERES ETIKETT
PROCÉDÉ DE FABRICATION D'UNE ÉTIQUETTE ANTI-CONTREFAÇON

(30) Priority: 21.12.2015 IT UB20159320
(43) Date of publication of application: 28.06.2017
(73) Proprietor: POLIROL S.P.A., 35015 Galliera Veneta (PD) (IT)
(72) Inventor: BRIGNANI, Ivan, 20813 BOVISIO MASCIAGO (MB) (IT)
(74) Representative: Longoni, Alessandra

(56) References cited:
- EP-A1- 2 317 491
- GB-A- 2 478 149
- US-A1- 2013 343 645
- US-B1- 6 308 991

## Description

### Technical field

The present invention generally relates to a manufacturing and managing method of an anti-counterfeiting label or component arranged to prevent any illicit use thereof.

In particular, the present invention relates to a manufacturing and managing method of a label to be applied to products of various type to allow a sure control of their origin and quality.

### Background art

Anti-counterfeiting devices such as labels to be applied to products of various type and kind to guarantee their origin and/or quality are known in the art.

Methods for generating anti-counterfeiting devices with a high security degree are also known.
For example, a method for generating security codes to be printed, for example, as two-dimensional bar codes or QR-CODE (Quick Response Code) on physical supports is known from the patent publication WO2015/117212_A1. Claim 1 is delimited against this document.

The known method provides for the generation of encrypted QR-CODEs through a public infrastructure so as to allow a high warranty of validity and security during encrypting as well as, subsequently, during reading.
The known method, while appearing very efficient, seems to be particularly complex since it provides for the use of a plurality of computing devices for encrypting and decrypting to guarantee the security of the QR-CODEs printed on physical supports.

A problem of such known art is that the managing security of the generation method and of the respective generated QR-CODEs is based only on their intrinsic impossibility to be counterfeited at the expense however of their easier generation and use.

There are also known, for example, a postal stamp comprising a mono-dimensional bar code covered by a scratchable patina from the patent application GB_2478149_A and a printed document comprising a mono-dimensional bar code covered by a scratchable patina from the patent US_6308991_B1.
The problem of said prior art documents is that the information contained in the mono-dimensional bar code covered by scratchable patina can be easily detected and decrypted.

From the patent application US2013/0343645_A1 the use of polychrome QR-CODEs wherein the colors are provided to increase the information content of the QR-CODEs is known.
The problem of this prior art is that the known polychrome QR-CODEs, similarly to the mono-dimensional bar codes, do not guarantee the security of the information content.

From the patent application EP_2317491_A1 a label to apply to a certain product comprising areas with adhesive alternated to areas without adhesive able to prevent, once the label is applied to the product, its reuse by removal from the product is known.
This kind of prior art shows the problem to give no security elements in addition to make difficult the removal of the labels from the products.

Generally, the Applicant has noted that the prior art is not able to efficiently solve the problem to provide for generation and use of QR-CODEs which are overall easier while allowing a high degree of validity and security.

### Disclosure of the Invention

Object of the present invention is to solve the above problem of the known art.
The object is reached by the method for manufacturing QR-CODEs having the features reported in the annexed claims.

The present invention relates also to a manufacturing and managing method of an anti-counterfeiting label or component having the features reported in the annexed claims.

The claims are integral part of the technical teaching herein provided in relation to the invention.

The following brief description of the invention has the purpose to give a basic understanding of some aspects of the invention.
This brief description is not an extensive description and, as such, it should not be intended to identify key or critical features of the invention, or to limit the scope of the invention. Its only purpose is to show some concepts of the invention in simplified form as a preview of the detailed description below reported.

According to a feature of a preferred embodiment, the anti-counterfeiting component comprises, printed on an adhesive support, a polychrome QR-CODE covered by a mechanically removable patina.

According to a further feature of the present invention, the anti-counterfeiting component comprises a plurality of half cuts designed to prevent, in use, a removal of the component after its application on a specific product.

According to another feature of the present invention, the anti-counterfeiting component is associated with a mono-dimensional bar code comprising information arranged for allowing to control the qualification or not-qualification to use the QR-CODE associated with a specific product.

### Brief description of Drawings

These and further features and advantages of the present invention will become clear from the following detailed description of a preferred embodiment, provided by way of a non-limiting example with reference to the attached drawings, in which components designated by same or similar reference numerals indicate components having same or similar functionality and construction and wherein:
Fig. 1 shows an example of method for manufacturing an anti-counterfeiting component according to the present invention;
Fig. 2 shows an anti-counterfeiting component manufactured according to the present invention as it can be seen if applied to a product; and
Fig. 3 shows the component of Fig. 2 with highlighted a polychrome QR-CODE reproduced on the component.

### Best mode for carrying out the Invention

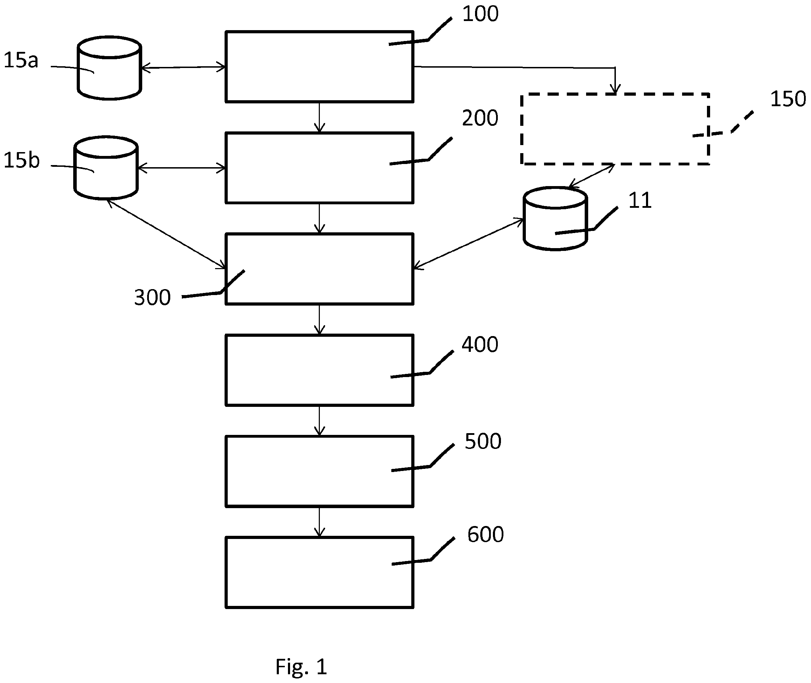

With reference to Fig. 1, a method for generating one or more anti-counterfeiting components or labels 10 for products of various type, for example, products of companies ordering labels manufactured according to the present invention is exemplified.

Labels 10 can have any geometric shape, for example square, rectangular, circular, helicoidal shape, etc. and it is provided that they are carried on a support.

In the figures reported in the present exemplificative embodiment, labels of square shape having borders with rounded corners are reported, for a simpler description, but such shape is not an essential shape for the manufacturing of the labels 10 according to the invention and it is only an example of a possible embodiment.

A preferred method for manufacturing the labels 10 according to the invention is reported herein after.

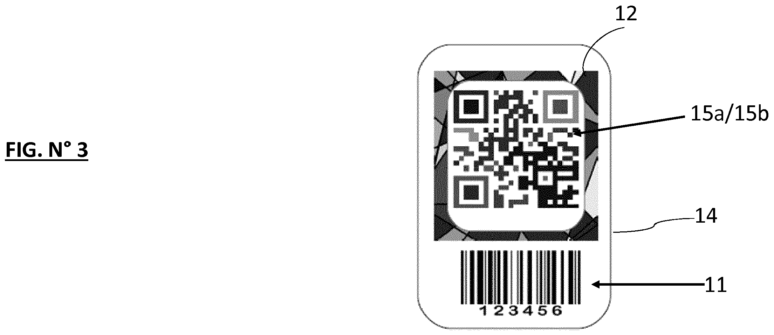

In a first phase 100 QR-CODEs (native QR-CODEs) 15a are generated and recorded (Fig. 1, Fig. 3) by a specific program arranged to include in each native QR-CODE 15a, i.e. in a black/white type QR-CODE, a plurality of information of both generic and technical nature predefined by the customer company, preferably a company manufacturing goods and products to commercialize.
Such information include, for example, information like progressive numbering, product validity data, manufacturing company name, etc.

In a second phase 200, each native QR-CODE 15a is reworked so that colors and shades are randomly associated with the information content contained therein by way of a program generating casual codes of known type. In this phase colors and shades are randomly associated to various elements of the information content of the native QR-CODEs 15a and distributed by way of a computer program so that said elements of the information content have colors differentiated in a completely random way. The so generated polychrome QR-CODEs 15b are stored in a database and prepared to be printed.
The polychrome QR-CODEs 15b represent codes which can differ each other not only for the information content of the native QR-CODEs 15a but also for the colors associated to their information content.
In other words, a plurality of polychrome QR-CODEs 15b can be associated to one native QR-CODE 15a.
In the preferred embodiment, this allows to identify the labels 10 on the basis of a chromatic recognition of their information content also when the information content of the native QR-CODE 15a is the same.

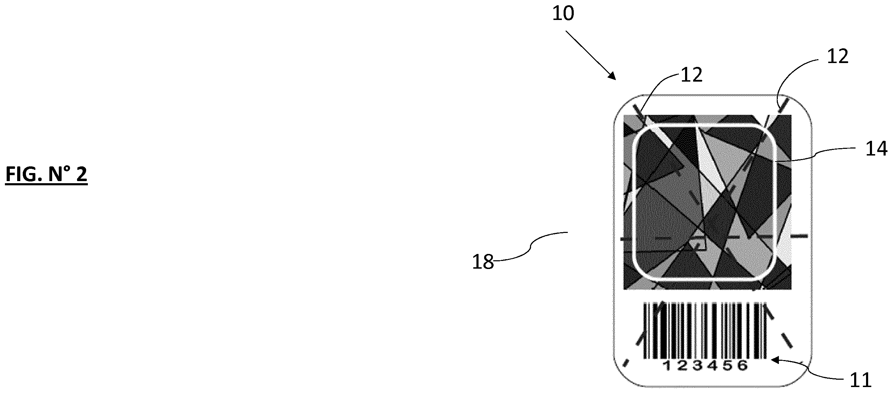

In a third phase 300, having obtained the correct generation and recordal of the QR-CODEs with polychrome elements (colored or polychrome QR-CODEs) 15b (Fig. 1, Fig. 2), each polychrome QR-CODE 15b is printed, for example, on printable adhesive paper transported on a support of known type.
According to the preferred embodiment, the labels 10 are made of adhesive paper, and transported in rolls on supporting material of low adherence of known type.
Of course, according to other embodiments, the labels can be made of other materials, such as for example PVC, PE, PET, PPL or printable plastic material, etc. and are transported in rolls on supporting material of low adherence of known type.

According to further embodiments, the labels may be made of paper or another one of the cited materials also of non-adhesive type, and mechanically applied, for instance, to the products.
Preferably, in case of paper labels, the printing is carried out with a highspeed Full-color (black, blue, red, yellow) ink-jet printer able to reproduce several combinations of colors and color shades in differentiated positions. Preferably, the polychrome QR-CODEs 15b are printed continuously and are dried by way of an infrared oven or IR oven.
Naturally, according to other embodiments, the color printer can be of another type provided that it is able to reproduce several combinations of colors and of color shades in differentiated positions depending from the information content of the polychrome QR-CODEs.

According to a variant of the method herein described, it is also provided a phase 150 wherein each native QR-CODE 15a is combined with a respective mono-dimensional bar code 11.
According to said variant, it is provided that each mono-dimensional code (bar code) 11 is not colored and is printed in the phase 300 in combination with and close to each polychrome QR-CODE 15b.
Preferably the bar codes 11 are provided to allow to control, for example, that their printing and the printing of the polychrome QR-CODEs 15b is correctly performed.
The bar codes 11 can also be used to be read by suitable scanners in an industrial process so that, for example, the activation or qualification of the associated native QR-CODE 15a and the recording and/or qualification of the polychrome QR-CODE 15b in the respective database can occur only if the bar code 11 is correctly managed during the industrial process for the manufacturing of the product of various type to commercialize.
For example, if a product is discarded during the manufacturing process, the mono-dimensional bar code could be used for not-qualifying the QR-CODE, 15a and 15b, and, for example, for not-recoding it and/or disabling it in the database controlling the native bar codes 15a and in the database of the polychrome bar codes 15b.

In a fourth phase 400, for example, after having rewinded the printed roll, it is provided that a removable patina 14 is printed over an area at least equal to or, preferably, slightly greater than that covered by the polychrome QR-CODE 15b (Fig. 1, Fig. 2, Fig. 3), preferably colored with more colors and with a graphic composed by differentiated geometric shapes and/or shades obtained by way of a printing program of known type. The patina 14, according to the preferred embodiment of the present invention, is scratchable or mechanically removable and is of help to avoid reading the polychrome QR-CODE 15b below the patina 14.
Preferably the patina 14 is printed, without covering the bar code 11, if present, by inserting the printed roll on a printing machine, for example of a Flexographic type or also offset type, configured to print the scratchable patina 14, for example in more colors and with graphics composed by several geometric shapes and highlights.
Preferably, the patina 14 is printed without covering the bar code 11, if present.

In a fifth phase 500, it is provided that half cuts 12 are made on the area corresponding to that of the labels, for example by way of a metallic socked punch.
The half cuts are provided to avoid removal of the label once attached to the dedicated product or support and within the scope of the present description the term half cuts is used to indicate cuts spaced out by sections where there are no cuts.
Preferably the half cuts are made with the same printing machine used to print the scratchable colored patina on the polychrome QR-CODEs.
In case of use of labels 10 of adhesive paper, the half cuts 12 can be distributed so to cross over all the area of the labels or so to cross over only a peripheral area of the labels since the paper shows, generally, characteristics of high brittleness. In fact, the Applicant has observed that, once a paper label is made to adhere on an area, any half cut 12, even if only on the peripheral area of the label, prevents the removal of the label without tearing it.
In case of labels of materials different from paper, such as for example plastic material, it is preferable that the half cuts 12 cross over all the area of the labels 10, as highlighted in Fig. 2, in order to avoid that the label is removed from the products without being torn.

Preferably, in a final phase 600, the labels, which are complete in their graphics and safety mechanics, are rolled on themselves so forming, for example, a plurality of rolls of variable diameters on the basis of the needs of the customer.
The resultant rolls are such to allow an ease use at the customer companies since the rolls can be used by industrial labelling machines of known type to apply the labels 10 continuously and rapidly on the products. According to the present practical embodiment, each anti-counterfeiting component or label 10 comprises a plurality of security elements.
In particular, starting from a visible layer, herein indicated as upper layer, and proceeding layer by layer, up to a lower layer or support base 18 which preferably is made of adhesive paper, the label 10 comprises:
- a plurality of half cuts 12 (Fig. 2) arranged on a peripheral area of the labels or so to cross over all the area of the labels to prevent any transfer of a whole label from a product to another product. In fact these half cuts have the scope to prevent the forced removal of the whole label 10 after having made it to adhere on a product since, in case a forced removal is attempted, the label 10 breaks in several points so preventing the possibility to reuse it;
- a scratchable patina 14, preferably colored by using UV four-color printing or colored with UV metallic colors (GOLD, SILVER). The scratchable patina, for example with said coloration type, makes impossible the scanning and encoding of the below polychrome QR-CODE 15b;
- a polychrome QR-CODE 15b containing the information allowing a secure certification of each product by the customer or manufacturing company. Preferably, the polychrome QR-CODE 15b is printed on the lower layer 18, preferably made of adhesive paper 18 arranged to allow to fix, in a known manner, each label 10 on each product to certify.
For example, the labels 10 are distributed to the companies in rolls able to be used by industrial labelling machines of known type for the labelling of the single products.

The method of use (operation) of the label 10 as described is the following.

A buyer, who has bought a product, which the label 10 prepared according to the present invention is applied to, in a first step proceeds to remove, for example with a coin, the scratchable patina 14 in order to make visible the polychrome QR-CODE 15b.

Subsequently, the buyer proceeds to make a scan or picture of the polychrome QR-CODE 15b and to send it, for example, to the manufacturing company of the bought product.
This scanning and sending step can be performed, preferably, by way of an APP on SMARTPHONE and provided, for example, by the manufacturing company itself or available as standard APP on SMARTPHONE for scanning and sending activities.

The manufacturing company, following the receipt of the polychrome QR-CODE 15b, will proceed to check the validity of the received QR-CODE by, for example, a chromatic overlapping of the code sent by the buyer with the polychrome QR-CODE 15b, present in the database of the polychrome QR-CODEs and, optionally, by a comparison with the native QR-CODE 15a corresponding to the one received.
The manufacturing company will proceed, for example, in case of positive check, to give to the buyer a confirmation of the occurred identification of the QR-CODE associated with the product so certifying the authenticity of the product.

In these steps of check and certification the manufacturing company will be also able to provide back to the buyer, for example, further information, such as additional information about the certification or also information of guarantee of the characteristics of the product.

Advantageously, the direct and safe interaction between the buyer and the customer or manufacturing company of the certification service by way of the label 10 as described allows to obtain in a simple and inexpensive way the certification of products of various type without the need of particularly complex encrypting and decrypting strategies.

Of course, obvious modifications and/or variants to the above description are possible, in the components as well as in the details of the depicted preparation and of the operating method without falling outside the scope of the invention as defined in the following claims.

## Claims

1. A manufacturing and managing method of an anti-counterfeiting component including a certain shape and certain peripheral borders, said method comprising the steps of:
- generating on behalf of a certain company a native QR-CODE (15a) including a certain information about a certain product, said native QR-CODE (15a) being obtained by way of a first computer program on the basis of said certain information,
said method being **characterised by** the steps of:
- generating, by way of a second computer program a polychrome QR-CODE (15b) by randomly associating colors and shades to said certain information of said native QR CODE (15a),
- storing the polychrome QR-CODE (15b) in a database,
- printing on a bearing layer (18) said stored polychrome QR-CODE (15b),
- generating by way of a printing program graphics including several geometric shapes and/or highlights,
- printing a mechanically removable patina (14) comprising said graphics over an area greater than or at least equal to that covered by said polychrome QR-CODE (15b),
- applying a plurality of half cuts (12) at least partially on the edges of the component so as to prevent, in use, after applying the component to the product, a removal from the product without tearing the component.

2. The method according claim 1, wherein said step of printing said polychrome QR-CODE (15b) further comprises the step of:
- printing near said polychrome QR-CODE (15b) a mono-dimensional bar code (11) comprising a qualifying information arranged for allowing to control if the native QR-CODE (15a) and the polychrome QR-CODE (15b) are qualified or not-qualified for use.

3. The method according to claim 1 or 2, further comprising the steps of:
- removing on behalf of a user the patina (14) from the component applied to a product so as to make visible the polychrome QR-CODE (15b),
- scanning or recording at least the polychrome QR-CODE (15b) and transmitting by way of an electronic device the polychrome QR-CODE (15b),
- verifying on behalf of the company the received polychrome QR-CODE (15b) with the polychrome QR-CODE (15b) stored in the database by way of a controlling computer program,
- certifying or not certifying the product originality on the basis of a comparison between the received polychrome QR-CODE and the stored polychrome QR-CODE.

4. The method according to any one of claims 1 to 3, wherein said step of verifying the received polychrome QR-CODE with the stored polychrome QR-CODE comprises the step of:
- chromatically superimposing the received polychrome QR-CODE on the stored polychrome QR-CODE.

## Patentansprüche

1. Herstellungs- und Verwaltungsverfahren einer fälschungssicheren Komponente, enthaltend eine bestimmte Form und bestimme Peripheriegrenzen, wobei das Verfahren die folgenden Schritte umfasst:
- ein Generieren, für ein bestimmtes Unternehmen, eines nativen QR-CODES (15a), enthaltend eine bestimmte Information über ein bestimmtes Produkt, wobei der native QR-CODE (15a) mittels eines ersten Computerprogramms auf der Basis der bestimmten Informationen erhalten wird,
wobei das Verfahren **gekennzeichnet ist durch** die folgenden Schritte:
- ein Generieren, mittels eines zweiten Computerprogramms, eines polychromen QR-CODES (15b) durch zufälliges Zuordnen von Farben und Schattierungen zu den bestimmten Informationen des nativen QR-CODES (15a);
- ein Speichern des polychromen QR-CODES (15b) in einer Datenbank,
- ein Drucken auf eine Trägerschicht (18) des gespeicherten polychromen QR-CODES (15b),
- ein Generieren mittels eines Druckprogramms von verschiedene geometrische Formen und/oder Highlights enthaltender Graphik,
- ein Drucken einer mechanisch entfernbaren Patina (14), umfassend die Graphik, über eine Fläche, die größer als oder mindestens gleich derjenigen ist, die durch den polychromen QR-CODE (15b) bedeckt wird,
- ein Anwenden einer Vielzahl von Halbschnitten (12) mindestens teilweise an den Kanten der Komponente, um in Gebrauch nach dem Anwenden der Komponente auf das Produkt ein Entfernen vom Produkt ohne Reißen der Komponente zu verhindern.

2. Verfahren nach Anspruch 1, wobei der Schritt des Druckens des polychromen QR-CODES (15b) ferner den folgenden Schritt umfasst:
- ein Drucken in der Nähe des polychromen QR-CODES (15b) eines monodimensionalen Strichcodes (11), umfassend eine qualifizierende Information, die angeordnet ist, um eine Kontrolle zu ermöglichen, ob der native QR-CODE (15a) und der polychrome QR-CODE (15b) zum Gebrauch qualifiziert oder nicht qualifiziert ist.

3. Verfahren nach Anspruch 1 oder 2, ferner umfassend die folgenden Schritte:
- ein Entfernen, für einen Nutzer, der Patina (14) von der auf ein Produkt angewendeten Komponente, um den polychromen QR-CODE (15b) sichtbar zu machen,
- ein Scannen oder Aufzeichnen mindestens des polychromen QR-CODES (15b) und ein Übertragen mittels einer elektronischen Vorrichtung des polychromen CR-CODES (15b),
- ein Verifizieren, für das Unternehmen, des empfangenen polychromen QR-CODES (15b) mit dem polychromen QR-CODE (15b), der in der Datenbank gespeichert ist, mittels eines kontrollierenden Computerprogramms,
- ein Zertifizieren oder Nicht-Zertifizieren der Produktoriginalität auf der Basis eines Vergleichs zwischen dem empfangenen polychromen QR-CODE und dem gespeicherten polychromen QR-CODE.

4. Verfahren nach einem der Ansprüche 1 bis 3, wobei der Schritt des Verifizierens des empfangenen polychromen QR-CODES mit dem gespeicherten polychromen QR-CODE den folgenden Schritt umfasst:
- ein chromatisches Überlagern des empfangenen polychromen QR-CODES auf dem gespeicherten polychromen QR-CODE.

## Revendications

1. Procédé de fabrication et de gestion d'un composant anti-contrefaçon comprenant une certaine forme et certaines bordures périphériques, ledit procédé comprenant les étapes de :
- génération pour le compte d'une certaine entreprise d'un Code QR natif (15a) comprenant des certaines informations concernant un certain produit, ledit Code QR natif (15a) étant obtenu au moyen d'un premier programme informatique sur la base de ladite certaine information, ledit procédé étant **caractérisé par** les étapes de :
- génération, au moyen d'un second programme informatique, d'un Code QR polychrome (15b) en associant de manière aléatoire des couleurs et des nuances auxdites certaines informations dudit Code QR natif (15a),
- stockage du Code QR polychrome (15b) dans une base de données,
- impression sur une couche de support (18) dudit Code QR polychrome stocké (15b),
- génération au moyen d'un programme d'impression des graphiques comprenant plusieurs formes géométriques et/ou reflets,
- impression d'une patine pouvant être retirée mécaniquement (14) comprenant lesdits graphiques sur une surface supérieure ou au moins égale à celle couverte par ledit Code QR polychrome (15b),
- application d'une pluralité de demi-coupes (12) au moins partiellement sur les bords du composant de façon à empêcher, lors de l'utilisation, après application du composant sur le produit, un retrait du produit sans déchirer le composant.

2. Procédé selon la revendication 1, ladite étape d'impression dudit Code QR polychrome (15b) comprenant en outre l'étape de :
- impression à proximité dudit Code QR polychrome (15b) d'un code à barres monodimensionnel (11) comprenant des informations de qualifications agencées pour permettre de vérifier si le Code QR natif (15a) et le Code QR polychrome (15b) sont qualifiés ou non qualifiés pour utilisation.

3. Procédé selon la revendication 1 ou 2, comprenant en outre les étapes de :
- retrait pour le compte d'un utilisateur de la patine (14) du composant appliqué à un produit de façon à rendre visible le Code QR polychrome (15b),
- balayage ou enregistrement au moins du Code QR polychrome (15b) et transmission au moyen d'un dispositif électronique du Code QR polychrome (15b),
- vérification pour le compte de l'entreprise du Code QR polychrome reçu (15b) avec le Code QR polychrome (15b) stocké dans la base de données au moyen d'un programme informatique de vérification,
- certification ou non certification de l'originalité du produit sur la base d'une comparaison entre le Code QR polychrome reçu et le Code QR polychrome stocké.

4. Procédé selon l'une quelconque des revendications 1 à 3, ladite étape de vérification du Code QR polychrome reçu avec le Code QR polychrome stocké comprenant l'étape de :
- superposition chromatique du Code QR polychrome reçu au Code QR polychrome stocké.
